# EUROPÄISCHE PATENTSCHRIFT

(11) **EP 4 080 082 B1**
(45) Veröffentlichungstag und Bekanntmachung des Hinweises auf die Patenterteilung: **01.04.2026**
(21) Anmeldenummer: 22157085.6
(22) Anmeldetag: 16.02.2022
(51) Int. Cl.: F16F 15/06, F16F 15/08

(54) **LAGERANORDNUNG**
BEARING ASSEMBLY
AGENCEMENT DE PALIER

(30) Priorität: 22.03.2021 DE 102021107024
(43) Veröffentlichungstag der Anmeldung: 26.10.2022
(73) Patentinhaber: Riedlberger, Markus, 85302 Singenbach (DE)
(72) Erfinder: Riedlberger, Markus, 85302 Singenbach (DE)
(74) Vertreter: Wunderlich & Heim Patentanwälte PartG mbB

(56) Entgegenhaltungen:
- CN-A- 110 979 435
- CN-A- 112 038 533
- CN-U- 212 055 653

## Beschreibung

Die Erfindung betrifft eine Lageranordnung mit einem Schwingungskörper, einem Grundkörper mit mindestens zwei voneinander beabstandeten Halterungen, zwischen denen der Schwingungskörper aufgenommen ist, und Aufhängeelementen, mit welchen der Schwingungskörper in dem Grundkörper aufgehängt ist, wobei eine Schwingungsbewegung des Schwingungskörpers in einer Linearrichtung ermöglicht ist, gemäß dem Oberbegriff des Anspruchs 1.

Lageranordnungen gemäß dem Oberbegriff von Anspruch 1 sind beispielhaft aus den Druckschriften CN 212 055 653, CN 110 979 435 und CN 112 038 533 bekannt.

Lageranordnungen zum Aufhängen eines Körpers, welcher in Schwingungen versetzt werden kann, sind seit langem bekannt und vielfältig im Einsatz. Insbesondere bei Maschinen und Fahrzeugen, bei welchen an einem Körper Schwingungen erzeugt werden, welche nicht oder nur abgeschwächt auf einen Grundkörper übertragen werden sollen, kommen derartige Lageranordnungen zum Einsatz. Diese weisen in der Regel federnde Lagerelemente oder Gummipuffer auf.

Bei einer derartigen Lagerung mit flexiblen Lagerungselementen besteht für den schwingenden Körper nicht nur eine Bewegungsmöglichkeit in einer gewünschten Linearbewegungsrichtung, sondern auch in anderen Bewegungsrichtungen. Um eine gewünschte Führung des Schwingungskörpers in eine definierte lineare Bewegungsrichtung sicherzustellen, ist es grundsätzlich bekannt, zwischen dem Schwingungskörper und den Grundkörper eine entsprechende Linearführung vorzusehen, durch welche eine gerichtete lineare Bewegungsrichtung des Schwingungskörpers beim Schwingen sichergestellt ist.

Allerdings führt eine derartige zusätzliche lineare Führungseinrichtung zu zusätzlichen Kontaktflächen, wobei eine unerwünschte Übertragung von Schwingungen von dem Schwingungskörper auf den Grundkörper erfolgen kann sowie zusätzliche Reibungsverluste bei der Schwingungsbewegung auftreten können.

Der Erfindung liegt die **Aufgabe** zugrunde, eine Lageranordnung anzugeben, bei welcher eine lineare Bewegbarkeit eines Schwingungskörpers zu einen Grundkörper in besonders effizienter Weise sichergestellt ist.

Die Aufgabe wird durch eine Lageranordnung mit den Merkmalen des Anspruchs 1 gelöst. Bevorzugte Ausführungsformen der Erfindung sind in den abhängigen Ansprüchen angegeben.

Die erfindungsgemäße Lageranordnung ist dadurch gekennzeichnet, dass zwischen dem Schwingungskörper und jeder Halterung mindestens zwei etwa stabförmige Aufhängeelemente angeordnet sind, welche sich quer zur Linearrichtung in eine Aufhängerichtung erstrecken, dass die stabförmigen Aufhängeelemente an dem Schwingungskörper und/oder dem Grundkörper über ein Schwenklager schwenkbar um eine Schwenkachse angelenkt sind, welche quer zur Linearrichtung und zur Aufhängerichtung gerichtet ist, und dass die stabförmigen Aufhängeelemente und/oder die Schwenklager flexibel ausgebildet sind, wobei eine lineare Stauchbarkeit und eine lineare Dehnbarkeit in der Aufhängerichtung gegeben sind.

Eine Grundidee der Erfindung liegt darin, einen Schwingungskörper zwischen zwei Halterungen durch jeweils mindestens zwei vorzugsweise zueinander parallele stabförmige Aufhängeelemente quer zur vorgesehenen linearen Schwingungsrichtung eines Schwingungskörpers zu lagern. Um bei dieser Anordnung mit jeweils zwei seitlichen, zueinander parallelen schwingenartigen Aufhängeelementen eine Bewegbarkeit zu ermöglichen, sind die Aufhängeelemente und/oder die Schwenklager an den Aufhängeelementen zumindest teilweise flexibel oder elastisch ausgebildet. Diese ermöglichen so eine gewisse lineare Stauchbarkeit und eine lineare Dehnbarkeit in der Aufhängerichtung, so dass in Kombination mit der doppelten Anordnung der stabförmigen Aufhängeelemente eine Beweglichkeit des Schwingungskörpers mit der gewünschten linearen Richtung gewährleistet ist, welche quer zur Aufhängerichtung gerichtet ist.

Vorzugsweise sind die seitlichen und gegenüberliegenden Aufhängeelemente symmetrisch zueinander angeordnet und ausgebildet, so dass sich im Betrieb auftretende Querkräfte gegeneinander aufheben und selbst ohne eine zusätzliche Linearführung eine definierte Linearbewegung des Schwingungskörpers beim Schwingen gegeben ist.

Eine bevorzugte Ausführungsform der Erfindung besteht darin, dass das stabförmige Aufhängeelement ein Teleskopstab mit einem hülsenförmigen ersten Stabteil und einem zweiten Stabteil ist, welches linear in dem ersten Stabteil geführt ist. Durch diese Ausgestaltung des Aufhängeelementes als ein Teleskopstab wird eine lineare Verschiebbarkeit der zwei Stabteile zueinander in Stablängsrichtung sichergestellt. So wird ein Aufhängeelement geschaffen, welches in seiner Stabrichtung und damit in der Aufhängerichtung bewegbar ist, in einer Querrichtung dazu jedoch steif ist.

Besonders vorteilhaft ist es nach einer Weiterbildung der Erfindung, dass das stabförmige Aufhängeelement ein elastisches Element aufweist. Das Aufhängeelement kann dabei zum Teil oder insgesamt elastisch ausgebildet sein.

Besonders bevorzugt ist es dabei, dass das elastische Element eine Feder und/oder ein Gummimaterial ist. Bei einem Teleskopstab kann so zwischen den zwei Stabelementen eine Schraubenfeder oder ein Element aus einem Gummimaterial angeordnet sein. Ein Gummimaterial ist im Sinne der Erfindung breit zu verstehen und umfasst grundsätzlich jedes synthetische oder natürliche Material, insbesondere einen Kunststoff, welcher ein entsprechendes Elastizitätsmodul für ein elastisches Verhalten ähnlich Gummi aufweist.

Grundsätzlich können die stabförmigen Aufhängeelemente lediglich an einem ihrer Enden über ein Schwenklager gelagert sein. Eine besonders zuverlässige Aufhängung wird nach einer Ausführungsform der Erfindung dadurch erzielt, dass die stabförmigen Aufhängeelemente an ihren beiden Enden über Schwenklager mit dem Grundkörper und den Schwingungskörper verbunden sind. Auf diese Weise werden Reibungsverluste besonders gut reduziert. Das Schwenklager erlaubt eine gewisse Schwenk- oder Drehbewegung um eine Schwenkachse.

Erfindungsgemäß ist das Schwenklager elastisch mit mindestens einem elastischen Lagerelement ausgebildet. Grundsätzlich kann das Schwenklager eine Buchse oder auch ein Wälzlager sein. Durch die teilweise oder vollständige Ausbildung des Schwenklagers mit mindestens einem elastischen Lagerelement kann eine gewünschte Flexibilität in der Aufhängerichtung selbst bei einem ansonsten starren Aufhängeelement erzielt werden.

Grundsätzlich kann das Schwenklager dabei in einer beliebigen Weise ausgebildet sein. Besonders vorteilhaft ist es nach einer Ausführungsvariante der Erfindung, dass das Schwenklager eine hülsenförmige Gummibuchse aufweist. Die Gummibuchse erlaubt dabei einerseits ein gewisses Verschwenken des angelenkten Aufhängeelementes um die Schwenkachse des Schwenklagers, welche einer Mittenachse der Gummibuchse entspricht. Gleichzeitig ermöglicht eine Gummibuchse auch eine gewisse Verschiebbarkeit quer zur Richtung der Schwenkachse, so dass die gewünschte Flexibilität in Aufhängerichtung bei der erfindungsgemäßen Lageranordnung erreicht wird.

Eine besonders gute Lagereigenschaft wird nach einer Weiterbildung dadurch erreicht, dass die Gummibuchse an ihrer Innenseite und/oder ihrer Außenseite mit einer Metallhülse versehen ist. Das derartig ausgebildete Schwenklager kann so in entsprechende Aufnahmebohrungen zuverlässig eingefügt werden, wobei auch bolzenförmige Elemente in die Buchse zum Halten der Aufhängeelemente eingefügt werden können. Dies wird durch Metallhülsen an der Innenseite beziehungsweise der Außenseite der Gummibuchse erreicht.

Die erfindungsgemäße Lageranordnung kann vielfältig eingesetzt werden. Eine bevorzugte Ausgestaltung besteht dabei darin, dass mindestens eine Lageranordnung an einem Fahrzeug angeordnet ist. Insbesondere kann durch die erfindungsgemäße Lageranordnung ein Motor oder ein Antrieb eines Fahrzeuges schwingungsarm am Fahrzeuggrundkörper gelagert werden. Hierdurch kann sich ein besonders guter Fahrkomfort eines Automobils, eines Zuges oder eines anderen Fahrzeuges ergeben.

Eine weitere vorteilhafte Ausgestaltung der Erfindung besteht darin, dass mindestens eine Lageranordnung in einer Maschine, insbesondere einer Arbeitsmaschine oder einer Werkzeugmaschine, angeordnet ist. Hierdurch können insbesondere im Betrieb der Maschine auftretende Schwingungen gegenüber einem Maschinengrundkörper gerichtet und auch gedämpft werden. Als Maschine kann insbesondere auch ein Bodenverdichter mit einer Rüttelplatte vorgesehen sein, wobei ein Schwingungsantrieb mit einer Rüttelplatte gegenüber dem sonstigen Maschinenkörper schwingungsarm gelagert ist, so dass etwa bei einem manuellen Betrieb einer Rüttelplatte eine besonders schonende Betätigung ermöglicht ist.

Der Rüttelantrieb kann dabei auch an einem Baggerarm vorgesehen sein, so dass sich die im Rüttelbetrieb ergebenden Schwingungen nicht oder nur in geringem Umfang auf den Baggerarm übertragen können. Bei einer Werkzeugmaschine können sich insbesondere bei einer Presse oder Stanze ergebende Schwingungen gegenüber einem Grundkörper in besonders vorteilhafter Weise abgefangen werden.

Die Erfindung wird nachfolgend anhand eines bevorzugten Ausführungsbeispiels näher erläutert, welches schematisch in den Zeichnungen dargestellt ist. **In** den Zeichnungen zeigen:
- Fig. 1: eine erste schematische Seitenansicht einer erfindungsgemäßen Lageranordnung mit einem Schwingungskörper in einer oberen Position;
- Fig. 2: eine zweite schematische Seitenansicht der erfindungsgemäßen Lageranordnung von Fig. 1 mit dem Schwingungskörper in einer mittleren Position; und
- Fig. 3: eine schematische Seitenansicht der Lageranordnung von Fig. 1 und Fig. 2 mit dem Schwingungskörper in einer unteren Schwingungsposition.

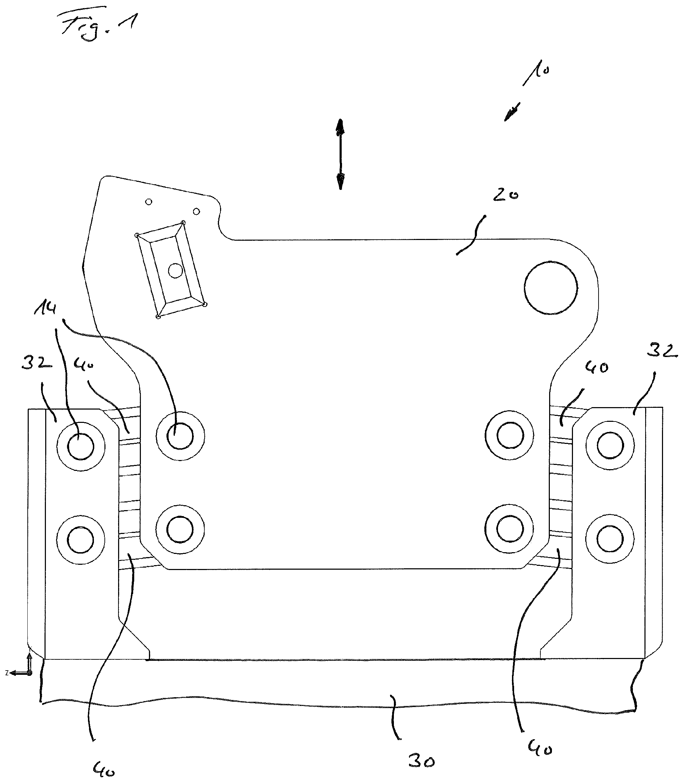

Eine erfindungsgemäße Lageranordnung 10 umfasst einen Schwingungskörper 20, welcher zwischen zwei Halterungen 32 eines Grundkörpers 30 aufgenommen und auf jeder Seite über zwei stabförmige Aufhängeelemente 40 frei schwingend in einer linearen Bewegungsrichtung aufgehängt ist. Die lineare Bewegungsrichtung ist in Fig. 1 durch einen Doppelpfeil angegeben. Der Schwingungskörper 20 kann insbesondere eine schwingungserzeugende Vorrichtung oder ein Antrieb sein, insbesondere ein Unwuchtantrieb, wie er etwa zum Antreiben einer Rüttelplatte eingesetzt wird. Entsprechend kann der Grundkörper 30 mit den Halterungen 32 an einem Baggerarm ausgebildet oder angebracht sein.

Zum Erzielen einer weitgehend linear geführten Schwingungsbewegung des Schwingungskörpers 20 sind die insgesamt vier Aufhängeelemente 40 stabförmig ausgebildet, wobei deren Längserstreckung einer Aufhängerichtung entspricht. Die Aufhängerichtung ist dabei quer gerichtet zu der definierten linearen Schwingungsbewegung des Schwingungskörpers 20 gerichtet.

Die schwingenartigen Aufhängeelemente 40 sind dabei an ihren beiden freien Enden über Schwenklager 14 einerseits an der Halterung 32 und andererseits an dem Schwingungskörper 20 schwenkbar oder auslenkbar verbunden. Die jeweiligen Schwenklager 14 weisen dabei eine mittige Gummibuchse 16 aus einem elastisch verformbaren Gummimaterial auf. An der Innenseite der Gummibuchse 16 ist eine inneren Metallhülse 17 und an der Außenseite eine äußere Metallhülse 18 angeordnet. Das Schwenklager 14 ermöglicht so eine gewisse Schwenk- oder Drehbewegung der Aufhängeelemente 40 um die jeweilige Schwenkachse, welche im dargestellten Ausführungsbeispiel senkrecht zur Zeichnungsebene verläuft.

Durch die so erreichte Elastizität der Schwenklager 14 wird eine lineare Schwingungsbewegung des Schwingungskörpers 20 in der dargestellten Pfeilrichtung zwischen den zwei parallel zueinander beabstandet angeordneten Halterungen 32 auch bei Verwendung von starren stabförmigen Aufhängeelementen 40 ermöglicht.

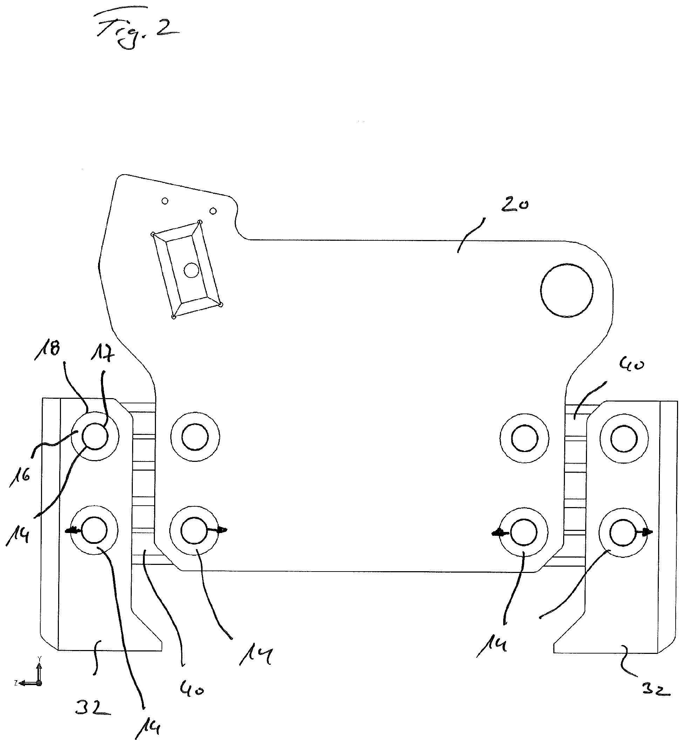

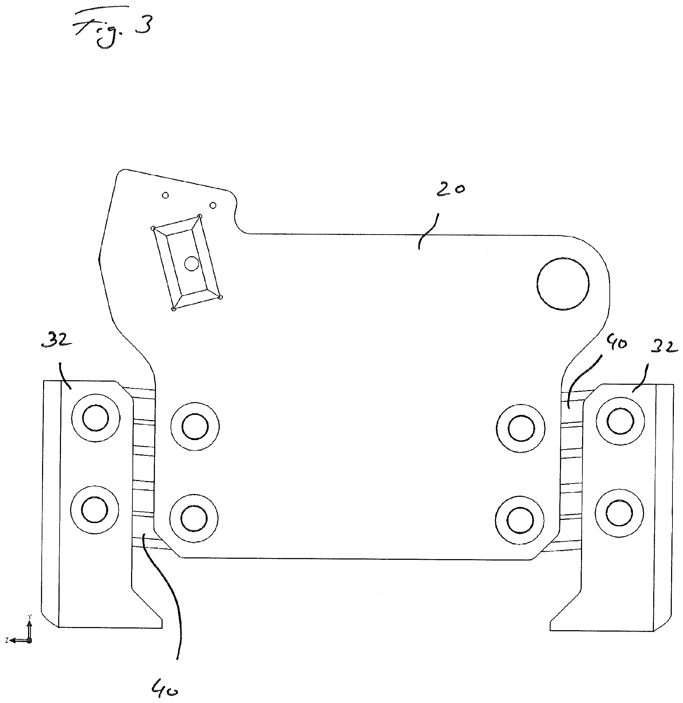

Von der in Fig. 1 dargestellten oberen Schwingungsposition des Schwingungskörpers 20 kann sich der Schwingungskörper 20 durch einen inneren Vibrations- oder Schwingungsantrieb über eine mittlere Schwingungsposition gemäß Fig. 2 zu einer unteren Schwingungsposition gemäß Fig. 3 bewegen. Die Aufhängeelemente 40 führen dabei eine gewisse Drehbewegung um ihre jeweilige Schwenkache an der Halterung 32 aus. Aufgrund der starren Ausgestaltung der Aufhängeelemente 40 in dem dargestellten Ausführungsbeispiel ergibt sich bei Annäherung zu der mittleren Schwingungsposition gemäß Fig. 2 in den Schwenklagern 14 aufgrund deren Elastizität eine gewisse Verlagerung der inneren Metallhülse 17 und damit der Schwenkachse relativ zu äußeren Metallhülse 18, wie schematisch in Fig. 2 durch Pfeile an den unteren Schwenklagern 14 verdeutlicht ist. So können die schwingenartigen Aufhängeelemente 40 nach unten schwenken.

Bei einer weiteren nach-unten-Bewegung des Schwingungskörpers 20 aus der mittleren Position heraus kann sich die innere Metallhülse 17 wieder in ihre zentrische Position zur Gummibuchse 16 und zur äußeren Metallhülse 18 zurück bewegen, wie in Fig. 3 gezeigt ist.

Vorzugsweise kann in den Figuren 1 und 3 die jeweils maximale Auslenkposition in der linearen Bewegungsrichtung des Schwingungskörpers 20 dargestellt sein, wobei in diesen beiden Positionen die Schwenklager 14 jeweils eine gleiche entspannte Position aufnehmen können.

Durch eine gleiche Ausgestaltung der Aufhängeelemente 40 sowie der Schwenklager 14 zu beiden Seiten des Schwingungskörpers 20 kann eine symmetrische Führung und Aufhängung des Schwingungskörpers 20 erreicht werden. So kann eine definierte lineare Schwingungsbewegung des Schwingungskörpers 20 ohne eine zusätzliche lineare Zwangsführung erreicht werden.

## Patentansprüche

1. Lageranordnung mit
- einem Schwingungskörper (20),
- einem Grundkörper (30) mit mindestens zwei voneinander beabstandeten Halterungen (32), zwischen denen der Schwingungskörper (20) aufgenommen ist, und
- Aufhängeelementen (40), mit welchen der Schwingungskörper (20) in dem Grundkörper (30) aufgehängt ist, wobei eine Schwingungsbewegung des Schwingungskörpers (20) in einer Linearrichtung ermöglicht ist,
- wobei zwischen dem Schwingungskörper (20) und jeder Halterung (32) mindestens zwei etwa stabförmige Aufhängeelemente (40) angeordnet sind, welche sich quer zur Linearrichtung in eine Aufhängerichtung erstrecken,
- wobei die stabförmigen Aufhängeelemente (40) an dem Schwingungskörper (20) und/oder dem Grundkörper (30) über ein Schwenklager (14) schwenkbar um eine Schwenkachse angelenkt sind, welche quer zur Linearrichtung und zur Aufhängerichtung gerichtet ist, und
- wobei die stabförmigen Aufhängeelemente (40) und/oder die Schwenklager (14) flexibel ausgebildet sind, wobei eine lineare Stauchbarkeit und eine lineare Dehnbarkeit in der Aufhängerichtung gegeben sind,
**dadurch gekennzeichnet,**
**dass** das Schwenklager (14) elastisch mit mindestens einem elastischen Lagerelement ausgebildet ist.

2. Lageranordnung nach Anspruch 1,
**dadurch gekennzeichnet,**
**dass** das stabförmige Aufhängeelement (40) ein Teleskopstab mit einem hülsenförmigen ersten Stabteil und einem zweiten Stabteil ist, welches linear in dem ersten Stabteil geführt ist.

3. Lageranordnung nach Anspruch 1 oder 2,
**dadurch gekennzeichnet,**
**dass** das Aufhängeelement (40) ein elastisches Element aufweist.

4. Lageranordnung nach Anspruch 3,
**dadurch gekennzeichnet,**
**dass** das elastische Element eine Feder und/oder ein Gummimaterial ist.

5. Lageranordnung nach einem der Ansprüche 1 bis 4,
**dadurch gekennzeichnet,**
**dass** die stabförmigen Aufhängeelemente (40) an ihren beiden Enden über Schwenklager (14) mit dem Grundkörper (30) und dem Schwingungskörper (20) verbunden sind.

6. Lageranordnung nach einem der Ansprüche 1 bis 5,
**dadurch gekennzeichnet,**
**dass** das Schwenklager (14) eine hülsenförmige Gummibuchse (16) aufweist.

7. Lageranordnung nach Anspruch 6,
**dadurch gekennzeichnet,**
**dass** die Gummibuchse (16) an ihrer Innenseite und/oder ihrer Außenseite mit einer Metallhülse (17, 18) versehen ist.

8. Fahrzeug,
**dadurch gekennzeichnet,**
**dass** diese mindestens eine Lageranordnung (10) nach einem der Ansprüche 1 bis 7 aufweist.

9. Maschine, insbesondere Arbeitsmaschine oder Werkzeugmaschine,
**dadurch gekennzeichnet,**
**dass** diese mindestens eine Lageranordnung (10) nach einem der Ansprüche 1 bis 7 aufweist.

## Claims

1. Bearing arrangement, comprising
- an oscillating body (20),
- a base body (30) having at least two mutually spaced holders (32), between which the oscillating body (20) is accommodated, and
- suspension elements (40), by means of which the oscillating body (20) is suspended in the base body (30), wherein an oscillating movement of the oscillating body (20) in a linear direction is enabled,
- wherein between the oscillating body (20) and each holder (32) at least two substantially rod-shaped suspension elements (40) are arranged, which extend transversely to the linear direction in a suspension direction,
- wherein the rod-shaped suspension elements (40) are articulated on the oscillating body (20) and/or the base body (30) via a pivot bearing (14) so as to be pivotable about a pivot axis which is oriented transversely to the linear direction and to the suspension direction, and
- wherein the rod-shaped suspension elements (40) and/or the pivot bearings (14) are designed to be flexible, wherein linear compressibility and linear extensibility are provided in the suspension direction,
**characterized in that**
the pivot bearing (14) is elastically designed with at least one elastic bearing element.

2. Bearing arrangement according to claim 1,
**characterized in that**
the rod-shaped suspension element (40) is a telescopic rod with a sleeve-shaped first rod part and a second rod part which is guided linearly in the first rod part.

3. Bearing arrangement according to claim 1 or 2,
**characterized in that**
the suspension element (40) comprises an elastic element.

4. Bearing arrangement according to claim 3,
**characterized in that**
the elastic element is a spring and/or a rubber material.

5. Bearing arrangement according to any one of claims 1 to 4,
**characterized in that**
the rod-shaped suspension elements (40) are connected at both of their ends to the base body (30) and to the oscillating body (20) via pivot bearings (14).

6. Bearing arrangement according to any one of claims 1 to 5,
**characterized in that**
the pivot bearing (14) comprises a sleeve-shaped rubber bushing (16).

7. Bearing arrangement according to claim 6,
**characterized in that**
the rubber bushing (16) is provided on its inner side and/or its outer side with a metal sleeve (17, 18).

8. Vehicle,
**characterized in that**
the vehicle comprises at least one bearing arrangement (10) according to any one of claims 1 to 7.

9. Machine, in particular a work machine or a tool machine,
**characterized in that**
the machine comprises at least one bearing arrangement (10) according to any one of claims 1 to 7.

## Revendications

1. Dispositif de palier comprenant
- un corps oscillant (20),
- un corps de base (30) comportant au moins deux supports (32) espacés l'un de l'autre, entre lesquels le corps oscillant (20) est logé, et
- des éléments de suspension (40), au moyen desquels le corps oscillant (20) est suspendu dans le corps de base (30), une oscillation du corps oscillant (20) dans une direction linéaire étant rendue possible,
- dans lequel entre le corps oscillant (20) et chaque support (32) sont disposés au moins deux éléments de suspension sensiblement en forme de tige (40), lesquels s'étendent transversalement à la direction linéaire dans une direction de suspension,
- dans lequel les éléments de suspension en forme de tige (40) sont articulés de manière pivotante sur le corps oscillant (20) et/ou sur le corps de base (30) par l'intermédiaire d'un palier pivotant (14), de manière à pouvoir pivoter autour d'un axe de pivotement orienté transversalement à la direction linéaire et à la direction de suspension, et
- dans lequel les éléments de suspension en forme de tige (40) et/ou les paliers pivotants (14) sont réalisés de manière flexible, une compressibilité linéaire et une extensibilité linéaire dans la direction de suspension étant prévues,
**caractérisé en ce que**
le palier pivotant (14) est réalisé de manière élastique avec au moins un élément de palier élastique.

2. Dispositif de palier selon la revendication 1,
**caractérisé en ce que**
l'élément de suspension en forme de tige (40) est une tige télescopique comprenant une première partie de tige en forme de manchon et une seconde partie de tige, laquelle est guidée linéairement dans la première partie de tige.

3. Dispositif de palier selon la revendication 1 ou 2,
**caractérisé en ce que**
l'élément de suspension (40) comporte un élément élastique.

4. Dispositif de palier selon la revendication 3,
**caractérisé en ce que**
l'élément élastique est un ressort et/ou un matériau en caoutchouc.

5. Dispositif de palier selon l'une quelconque des revendications 1 à 4,
**caractérisé en ce que**
les éléments de suspension en forme de tige (40) sont reliés à leurs deux extrémités au corps de base (30) et au corps oscillant (20) par des paliers pivotants (14).

6. Dispositif de palier selon l'une quelconque des revendications 1 à 5,
**caractérisé en ce que**
le palier pivotant (14) comporte une douille en caoutchouc (16) en forme de manchon.

7. Dispositif de palier selon la revendication 6,
**caractérisé en ce que**
la douille en caoutchouc (16) est pourvue, sur sa face intérieure et/ou sur sa face extérieure, d'un manchon métallique (17, 18).

8. Véhicule,
**caractérisé en ce que**
le véhicule comporte au moins un dispositif de palier (10) selon l'une quelconque des revendications 1 à 7.

9. Machine, notamment machine de travail ou machine-outil,
**caractérisée en ce que**
la machine comporte au moins un dispositif de palier (10) selon l'une quelconque des revendications 1 à 7.
